# EUROPEAN PATENT SPECIFICATION

(11) **EP 1 523 114 B1**
(45) Date of publication and mention of the grant of the patent: **14.02.2007**
(21) Application number: 04023795.0
(22) Date of filing: 06.10.2004
(51) Int. Cl.: H04B 10/08

(54) **Optical transmission system**
Optisches Übertragungssystem
Système de transmission optique

(30) Priority: 07.10.2003 JP 2003347972
(43) Date of publication of application: 13.04.2005
(73) Proprietor: Pioneer Corporation, Meguro-ku, Tokyo (JP)
(72) Inventor: Akimoto, Takayuki, Ohta-ku, Tokyo (JP); Noguch, Ryoji, Ohta-ku, Tokyo (JP); Shinokura, Kiichiro, Ohta-ku, Tokyo (JP)
(74) Representative: Manitz, Finsterwald & Partner GbR

(56) References cited:
- GB-A- 2 369 509
- US-A- 4 994 675
- US-B1- 6 433 905
- US-B1- 6 614 968

## Description

### BACKGROUND OF THE INVENTION

### 1. Field of the Invention

The present invention relates to an optical transmission system which transmits and receives an optical signal through an optical transmission path, for example, an optical fiber cable or the like.

### 2. Description of the Related Art

In recent years, with a reduction in price of optical fiber cables and the progress of optical transmission technologies, even ordinary audio visual apparatuses incorporate an optical transceiver utilizing optical fiber cables, and are increasingly pervasive in ordinary households as well. However, if a trouble occurs, for example, a broken optical fiber cable, an optical fiber cable detached from an optical connector, or the like while the optical transceiver is in use, an optical beam is radiated to the outside of the optical transceiver.

Conventionally, measures have been taken for preventing such troubles. JP-A-2000131566 discloses a front plate structure for an optical connector which comprises an optical shutter in an optical output part of an optical transceiver, and uses the optical shutter to block an optical beam if an optical connector or an optical fiber cable comes off the transceiver. Also, JP-A-2003032189 discloses an optical transceiver which measures the level of a received optical signal from a destination device connected through an optical fiber cable, determines that a trouble has occurred such as a broken optical fiber cable, a detached optical connector, or the like when the level falls below a predetermined threshold, and reduces the power of its optical output part.

However, an optical shutter which involves a mechanical structure causes a more complicated structure of the apparatus, and an increase in susceptibility due to mechanical operations is not negligible. On the other hand, a method of detecting the level of received light additionally requires elements and circuits for detecting the level of received light, causing a complicated structure of the apparatus, like the former solution. Also, since the level of received light largely varies due to an attenuation factor of an optical fiber cable used as a transmission path, and a dynamic range of a transmitted optical signal, a threshold improperly set for determining the level of received light would cause frequent malfunctions. Further, it would be desirable to provide a fault detecting system which is stable in detecting operation and does not malfunction even with a transient signal error due to the introduction of noise or the like.

US 6,433,905 discloses equipment of a hybrid fiber-coaxial network having a frequency agile transponder connected thereto. Each frequency agile transponder includes a transmitter and a receiver which are connectable to a coaxial line of the network. Bidirectional communication can occur between a controller and each frequency agile transponder via the network. The frequency agile transponder has analog inputs/outputs connectable to test points. A computer can store the test result data for subsequent retrieval and/or generate an alarm when a particular test result data exceeds a predetermined limit.

US 4,994,675 discloses an optical transmission system having the features of the preamble of claim 1.

### SUMMARY OF THE INVENTION

It is an object of the present invention to provide an optical transmission system and a method which are capable of accurately detecting a fault on an optical transmission path.

This object is achieved with an optical transmission system having the features of claim 1, a fault detection processing method having the features of claim 5 or an optical terminal having the features of claim 7. Subclaims are directed to preferable embodiments.

### BRIEF DESCRIPTION OF THE DRAWINGS

Fig. 1 is a block diagram showing the configuration of an optical transmission system and an optical terminal device according to the present invention;
Fig. 2 is a sequence transition diagram showing the operation in a first embodiment of the present invention;
Figs. 3A to 3C are diagrams each showing an exemplary structure of a data format for test data which is used in the optical transmission system of the present invention;
Fig. 4 is a flow chart for explaining the operation in the first embodiment shown in Fig. 2;
Fig. 5 is a sequence transition diagram showing the operation in a second embodiment of the present invention; and
Fig. 6 is a flow chart for explaining the operation in the second embodiment shown in Fig. 5.

### DETAILED DESCRIPTION OF THE INVENTION

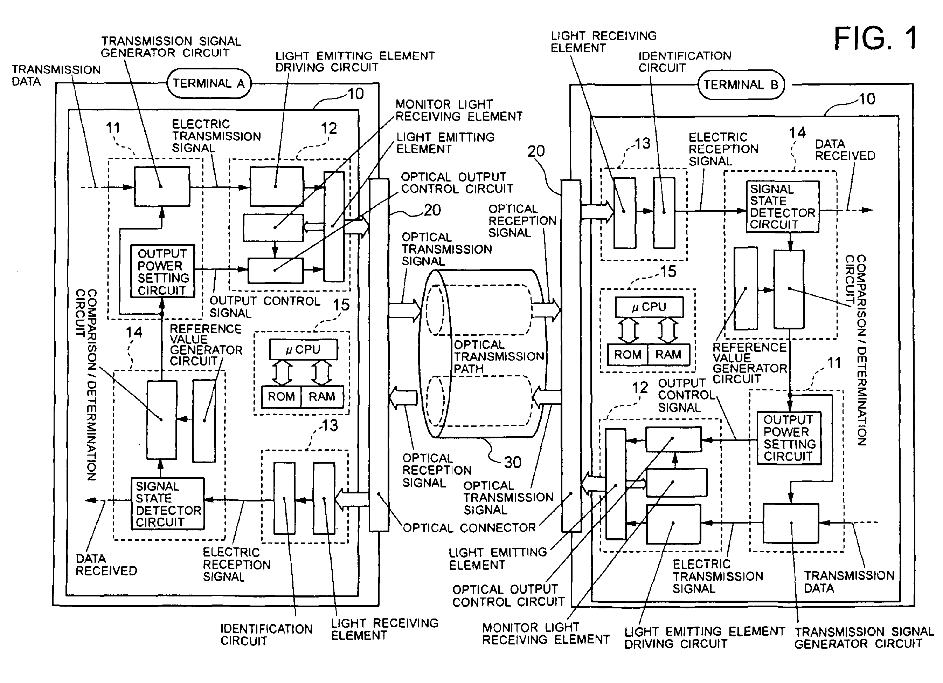

Fig. 1 shows an exemplary configuration of an optical transmission system and a optical transceiver 10 according to a first embodiment of the present invention.

In Fig. 1, a terminal A is a supply controller for a so-called audio visual source such as a video disk reproducing apparatus, a digital broadcast receiver, and the like. A terminal B in turn is an audio visual information display terminal device, for example, a wall-mounted television, a large screen display panel, or the like. The optical transceiver 10 is built in each of the two terminals, and the optical transceivers 10 contained in the respective terminals are connected to each other through optical connectors 20 and an optical fiber cable 30.

As shown in Fig. 1, the optical transceiver 10 mainly comprises a signal generator part 11, an optical transmitter unit 12, a light receiver unit 13, a signal state determination unit 14, and a control unit 15.

The signal generator part 11 mainly comprises a transmission signal generator circuit, and an output power setting circuit. The transmission signal generator circuit adds a synchronization signal and an error correcting code to a data signal representative of video, audio, and the like, transmitted from the terminal A to the terminal B, to generate an electric transmission signal in a predetermined transmission format. The transmission signal generator circuit also switches the number of times a transmission format for transmission data is repeated, and a format for the transmission data to a test mode, later described, in accordance with a state determination signal from the signal state determination part 14, later described. The output power setting circuit, in turn, generates an output control signal for adjusting the output power of an optical transmission signal output from the optical transmitter part 12 in accordance with the state determination signal.

The optical transmitter part 12 is composed of a light emitting element such as a semiconductor laser diode, a monitor light receiving element such as a photodiode, a light emitting element driving circuit, and an optical output control circuit. The light emitting element is applied with a modulated current signal from the light emitting element driving circuit in combination with a bias current signal from the optical output control circuit. Specifically, as the electric transmission signal from the signal generator part 11 is supplied to the light emitting element driving circuit, the light emitting element driving circuit generates a modulated current signal in accordance with the electric transmission signal, and the modulated current signal is applied to the light emitting element. The light emitting element is excited by the modulated current signal applied thereto, and outputs an optical transmission signal having output power in accordance with the level of the modulated current signal, i.e., high or low level, to the optical fiber cable 30 through the optical connector 20.

On the other hand, the output of the optical transmission signal is monitored by the monitor light receiving element which generates an electric monitor signal in accordance with the output power of the optical transmission signal, and supplies the electric monitor signal to the optical output control circuit. The optical output control circuit adjusts the value of the bias current signal such that the value of the electric monitor signal is constant. The optical output control circuit is also supplied with an output control signal from the signal generator part 11, so that the optical output control circuit adjusts the value of the bias current signal in accordance with the output control signal to increase or decrease the output power of the optical transmission signal.

The light receiver part 13 mainly comprises a light receiving element such as a photodiode, and an identification circuit. As an optical reception signal is input to the light receiving element from the optical transceiver 10 in the terminal B through the optical fiber cable 30 and optical connector 20, the light receiving element generates a light reception current signal of a magnitude conforming to the high or low level of the optical reception signal, and supplies the light reception current signal to the identification circuit. The identification circuit amplifies the light reception current signal, and performs signal processing such as waveform shaping on this signal to generate an electric reception signal.

The signal state determination part 14 mainly comprises a signal state detector circuit, a reference value generator circuit, and a comparison/determination circuit. The signal state detector circuit extracts a synchronization signal, an error correcting code, and the like from the electric reception signal to determine whether a receiving condition is good or bad. The comparison/determination circuit compares the result of the determination as to good or bad of the receiving condition with a reference value, indicative of goodness/badness of the receiving condition, generated by the reference value generator circuit to generate a predetermined condition determination signal which is supplied to the signal generator circuit 11.

The control part 15 mainly comprises a microprocessor, a memory circuit such as RAM, ROM, and the like, and an associated peripheral circuit. The control part 15 totally controls the entire optical transceiver 10, and is connected to the components described above through a bus line, not shown, and a variety of control and monitoring lines. The ROM in the memory circuit of the control part 15 stores a variety of programs for defining the operation of the optical transceiver 10. The microprocessor executes such programs step by step in synchronism with the clock signal to execute a variety of processing in the optical transceiver 10. The RAM in the memory circuit in turn is used as an temporary storage area for a variety of flags, processed values, or a variety of count values, and the like in course of the operational processing.

Arrows in Fig. 1 indicate flows of main signals between the respective components described above. For example, a response signal, a monitoring signal, and the like for the main signals may be transmitted in the directions opposite to those indicated by the arrows. The arrows in the figures indicate conceptual flows of signals between respective components, and in the actual optical transceiver, signals need not be transmitted and received along paths as indicated by the arrows. For example, a variety of control signals and state monitoring signals may be once collected in the control part 15 and then transmitted to associated components through the control part 15.

Further, while Fig. 1 represents each of the signal generator part 11, signal state determination part 14, and the like as an independent component, part or all of functions provided by these components may be implemented by software processing with a program stored in the memory of the control part 15. Alternatively, those components which exist independently of one another may be used in combination with part of functions of respective components implemented by software processing.

While each of the terminals A, B comprises a variety of circuits for performing essential functions of each terminal, for example, a video disk reproducing apparatus, a wall-mounted television, and the like, other than the optical transceiver 10, these circuits are not directly related to the implementation of the present invention, so that description thereon is omitted.

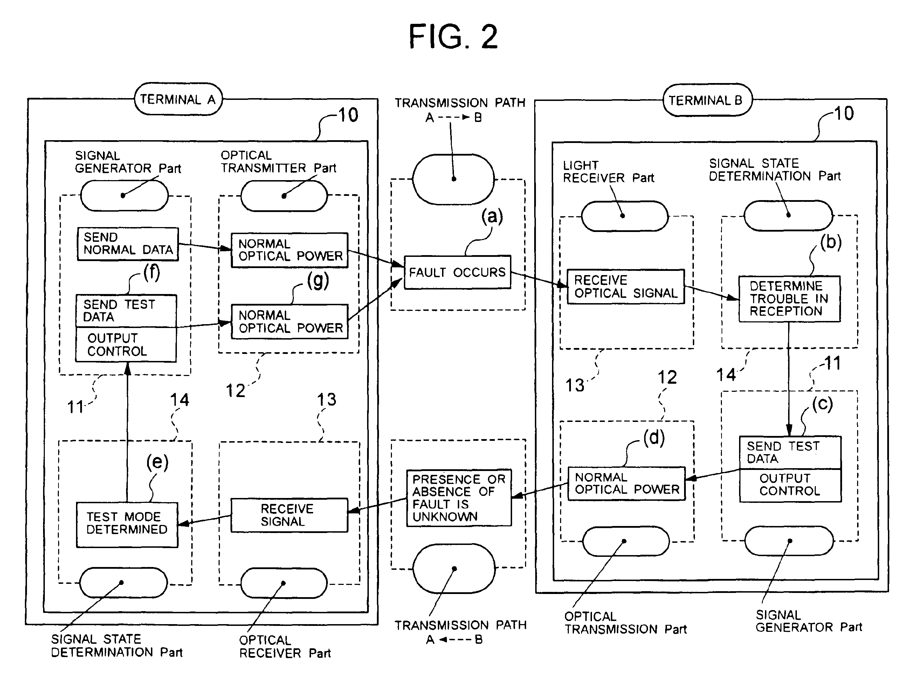

Next, a first embodiment of the present invention will be described with reference to a sequence transition diagram shown in Fig. 2.

First, as shown in step a in Fig. 2, assume that some fault occurs on a transmission path: terminal A --> terminal B, for example, detachment of the optical connector 20, breakage of the optical fiber cable 30, or the like.

This fault causes the terminal B to experience a failure in correctly detecting the synchronization signal included in received data, or a reduction in error rate of received data. The signal state determination part 14 of the terminal B, for example, evaluates such a state in the form of an error rate, an error correcting ratio, or the like with respect to a received signal, compares the value with a reference value indicative of a normal communication state, and determines that a trouble occurs in a signal receiving condition when the value exceeds the predetermined reference value (step b). As information on the determined trouble in reception is notified from the signal state determining part 14 to signal generator part 11 through a state determination signal, the signal generator part 11 switches the format of transmission data to test data, and generates an output control signal for reducing the power of an optical transmission signal which is output to the optical transmitter part 12 (step c).

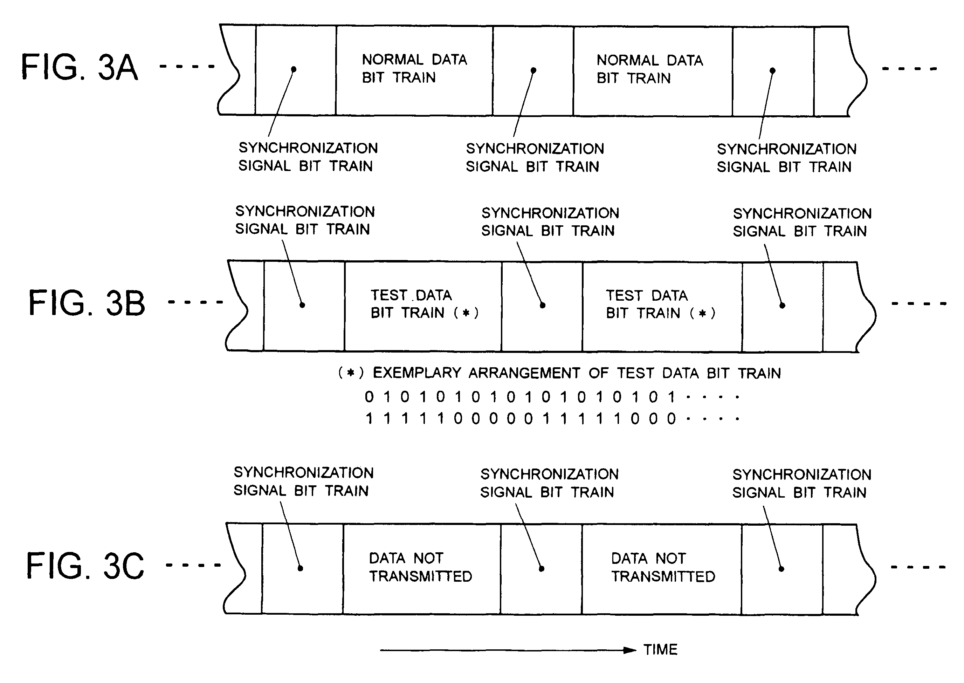

A variety of formats can be contemplated for the test data depending on conditions including a signaling scheme used in the optical transmission system, an operating policy of the system, and the like. For example, in the normal data transmission format shown in Fig. 3A, a data portion may be set in a bit pattern which cannot be generally taken by data, as shown in Fig. 3B, for use as test data. Alternatively, as shown in Fig. 3C, an interval between synchronization signals included in the transmission format may be defined as a signal untransmitted portion, and this transmission format may be used to identify the test data. Further alternatively, rather than changing the format for transmission data, a modulation method or a signal speed of a transmission signal may be made different from normal data, so that test data is recognized.

By the processing described above, predetermined test data is transmitted from the optical transmitter part 12 of the terminal B onto the transmission path: terminal B --> terminal A, as an optical transmission signal having a reduced output power.

On the other hand, an optical transmission signal from the terminal B is communicated to the terminal A through a transmission path: terminal B --> terminal A, and when the signal state determination part 14 of the terminal A determines that the received data is test data, the signal state determination part 14 of the terminal A notifies the signal generator part 11 of this information through a state determination signal (step e). Upon receipt of the notification, the signal generator part 11 switches the format of the transmission data to the aforementioned test data, and supplies the optical transmitter part 12 with an output control signal for reducing the output power of the optical transmission signal (step f). This causes the optical transmitter part 12 to output the test data as an optical transmission signal having reduced output power (step g), thus making it possible to reduce the output power of the optical transmission signal on the transmission path: terminal A --> terminal B, on which it is supposed that a fault has occurred.

After the output power of the optical transmission signal is reduced, for example, if faulty reception or reception of test data continues a predetermined number of times or for a predetermined time period or more in order to stop the optical transmission signal output onto the transmission path, the optical transmitter part 12 may be supplied with an output control signal for forcedly stopping the output of the optical transmission signal. Such a transmission stopping operation based on so-called timeout may be implemented in the optical transceiver 10 by any of the terminal A and terminal B, or may be implemented by the optical transceiver 10 in both the terminal A and terminal B.

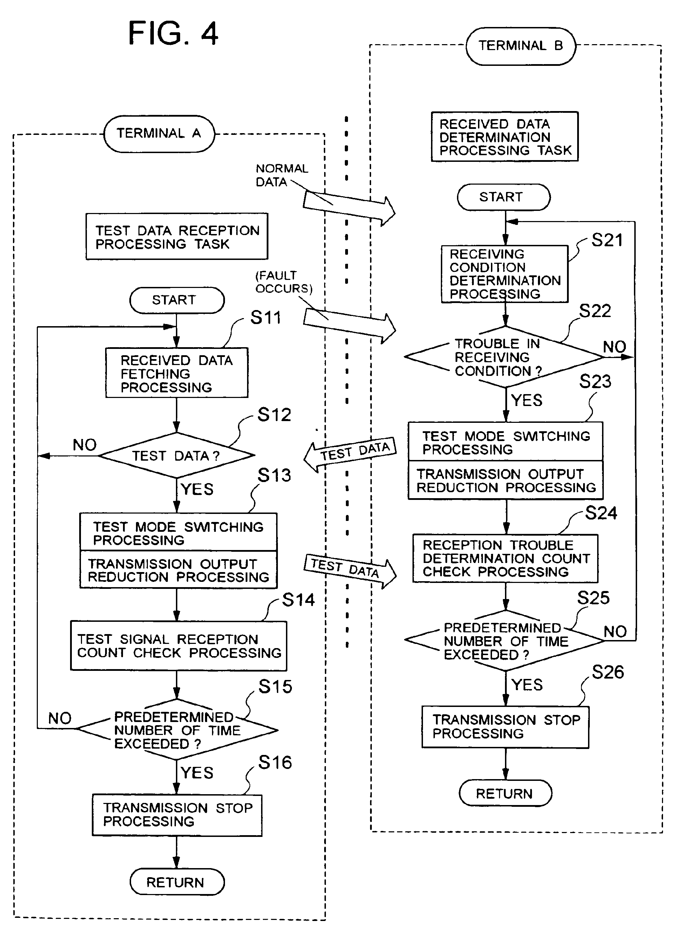

Next, the operation of the sequence processing shown in Fig. 2 will be described with reference to Fig. 4. The flow chart of Fig. 4 represents processing programs for the operation of the optical transceiver 10 incorporated in each of the terminals A, B which is related to the sequence processing in Fig. 2. In the following description, a program related to the processing in the terminal A is called the "test data reception processing task," while a program related to the processing in the terminal B is called the "received data determination processing task."

These programs have been previously stored in a predetermined region in the memory ROM included in the control part 15 of the optical transceiver 10, as a matter of course. Also, while the memory ROM stores, for example, a main program for generally controlling the operation of the optical transceiver 10, and a large number of other subroutine programs in addition to the foregoing programs, description on these programs is omitted because they are not directly related to the present invention.

First, a flow chart of the received data determination processing task will be described with reference to Fig. 4. This task may be repeatedly initiated at all times during the operation of the terminal B, or may be initiated in synchronism with reception of data from the terminal A.

As the task is initiated at a predetermined timing, the microprocessor (hereinafter simply called the "CPU") in the control part 15 determines a receiving condition based on a state determination signal from the signal state determination part 14 at step S21. As a result of the determination, if no trouble is recognized in the receiving condition, the CPU returns to step S21 to repeat the foregoing processing (step S22). To avoid preventing the execution of other processing executed by the CPU due to the continuing repetitive processing, the control of the CPU may be once returned to a main program (not shown) of the control part 15 during a repeatedly executed processing loop.

On the other hand, if a trouble is detected in the receiving condition by confirming information indicative of a missing synchronization signal or a rising error rate in the received signal, the CPU proceeds to step S23 to execute test mode switching processing and transmission output reduction processing. This brings the operation of the signal generator part 11 and optical transmitter part 12 into a test mode. Specifically, transmission data is replaced from normal data to test data in a special data format, and the output power of an optical transmission signal output from the terminal B is reduced by a variety of control instructions from the control part 15.

As the processing at step S23 terminates, the CPU proceeds to step S24 to execute reception trouble determination count check processing. This processing may be performed by providing a predetermined counter register within a RAM area of the control part 15, counting this each time the reception trouble determination is made at step S22, and referencing the count value, or performed by activating a timer (not shown) using a reference clock each time a reception trouble is determined, and referencing an accumulated elapsed time.

At step S24, if it is determined that the number of times a reception trouble is determined does not reach a predetermined value, the CPU returns to step S21 to repeat the processing described above (step S25). On the other hand, if the number of times of the determination exceeds the predetermined value, the CPU proceeds to step S26 to execute transmission stop processing. In this way, the optical transmitter part 12 is supplied with an output control signal for instructing the same to stop the optical transmission signal, thus stopping the delivery of the optical transmission signal from the terminal B.

Next, the flow chart of the test data reception processing task in the terminal A in Fig. 4 will be described. This task may be repeatedly initiated at all times when the state determination signal from the signal state determination part 14 does not indicate a reception trouble, or may be initiated each time received data from the terminal B is normally received.

As the task is initiated at a predetermined timing, the CPU of the control part 15 fetches received data from the signal state determination part 14 to analyze the format. If the data format does not correspond the aforementioned test data in Figs. 3B and 3C, the CPU returns to step S11 to repeat the foregoing processing (step S12).

On the other hand, if it is determined at step S12 that the received data is test data, the CPU proceeds to step S13 to execute the test mote switching processing and transmission output reduction processing. Specifically, based on instructions from the control part 15, transmission data from the terminal A is replaced from normal data to test data, and the output power of an optical transmission signal is reduced.

Subsequently, the CPU proceeds to step S14 to execute check processing for checking the number of times a test signal is received from the terminal B. If it is determined at step S14 that the number of times the test data is received does not reach a preset value, the CPU returns to step S11 to repeat the processing described above (step S15). On the other hand, if it is determined that the number of times of reception exceeds the predetermined value, the CPU proceeds to step S26 to execute transmission stop processing. This forces the terminal A to output an optical transmission signal onto the transmission path: terminal A --> terminal B, on which it is supposed that a fault has occurred.

As described above, the first embodiment of the present invention includes:
the signal generator part 11, optical transmitter part 12, optical receiver part 13, signal state determination part 14, and control part 15 which constitute a first test signal supplying means for supplying the test signal onto the optical transmission path upon detection of an error in the contents of a received signal received through the transmission path;
the signal generator part 11, optical transmitter part 12, optical receiver part 13, signal state determination part 14, and control part 15 which constitute a second test signal supplying means for supplying the test signal onto the optical transmission path upon detection of a received signal, received through the optical transmission path, which is equal to the test signal; and
the signal generator part 11, optical transmitter part 12, optical receiver part 13, signal state determination part 14, and control part 15 which constitute a communication stopping means for stopping transmission/reception of a signal through the optical transmission path when the content error detection frequency or the test signal detection frequency exceeds a predetermined threshold.

Therefore, according to this embodiment, when a fault occurs on the optical transmission path, an optical signal delivered from each terminal onto the optical transmission path can be promptly replaced with the test signal, and the delivery can be stopped, thereby making it possible to prevent an optical beam from leaking, for example, from an opening produced on the optical transmission path by the fault.

Next, a second embodiment of the present invention will be described. The second embodiment is intended to ensure a stable operation at the time each terminal is initiated, and at the time the optical transmission path is recovered from a trouble, in addition to the first embodiment. Since the configuration of an optical transmission system to which this embodiment is applied is the same as the first embodiment, description on the configuration is omitted.

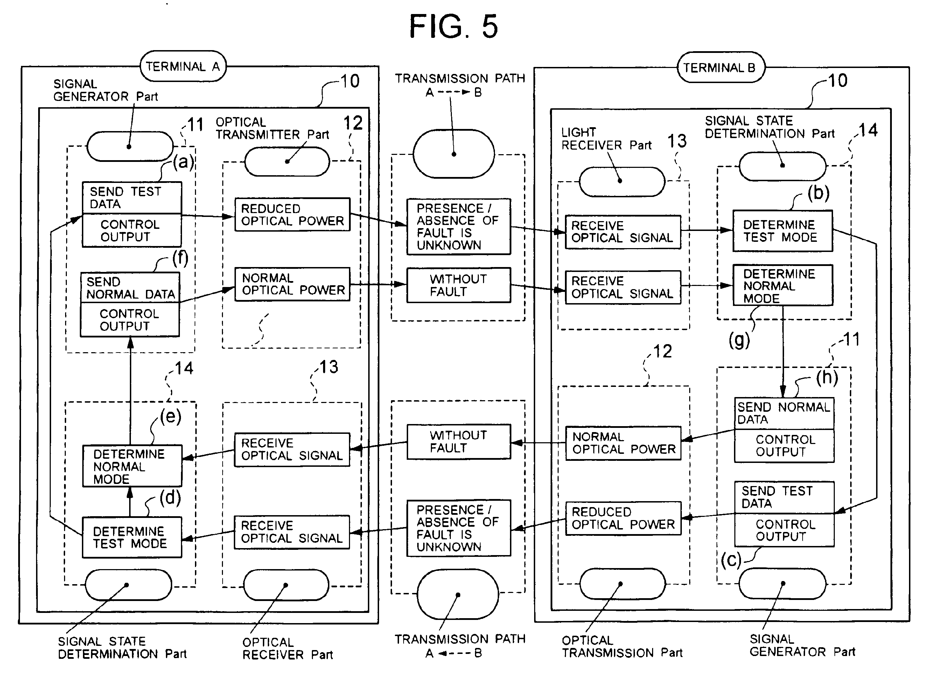

This embodiment will be described with reference to a sequence transition diagram shown in Fig. 5. A case represented in Fig. 5 is given on the assumption that the terminal A is initiated in response of power-on or a reset instruction applied thereto.

First, as the terminal A is initiated, the signal generator part 11 of the optical transceiver 10 incorporated in the terminal A sets the test data in the format, for example, shown in Figs. 3B and 3C to transmission data at step a in Fig. 5. Also, the optical transmitter part 12 delivers the transmission signal onto the transmission path: terminal A --> terminal B, as an optical transmission signal having reduced output power in response to an output control instruction from the signal generator part 11.

On the other hand, the receiving condition determination part 14 of the terminal B checks received data from the terminal A, and when determining that the transmission mode of the terminal A is the test mode, notifies the signal generator part 11 of this information (step b). In this way, the signal generator part 11 sets the test data to transmission data, and the optical transmission part 12 delivers this test data onto the transmission path: terminal B --> terminal A, as an optical transmission signal having reduced output power in response to an output control instruction from the signal generator part 11 (step c).

As the signal from the terminal B is transmitted to the terminal A, the signal state determination part 14 of the terminal A checks the received data to determine whether the transmission mode of the terminal B is the normal mode or test mode (step d). If the test mode is determined at step d, the number of times of determination is also checked, and if the number of times does not reach a predetermined value, the CPU returns to step a to repeat the foregoing processing.

On the other hand, if the transmission mode of the terminal B is determined to be the normal mode at step d, or if the number of times of determination reaches the predetermined number, the signal state determination part 14 notifies the signal generator part 11 of the end of the test mode at the initiation (step e). Upon receipt of the notification, the signal generator part 11 switches transmission data from test data to normal data, and generates an output control instruction to the optical transmitter part 12 to increase the output power of the optical transmission signal to that for normal data transmission (step f). In this way, normal data such as a video/audio signal and the like from the terminal A is delivered onto the transmission path: terminal A --> terminal B, as an optical transmission signal having normal output power.

Upon receipt of the normal data, the reception determination part 14 of the terminal B determines that the transmission mode of the terminal A is the normal mode, and notifies the signal generator part 11 of the result (step g), causing the terminal B to terminate the test mode of the transmission operation and to transition to the normal mode in which normal data is sent with normal output power (step h).

In the embodiment of Fig. 5, the operation of the processing method has been described in connection with the initiation of the terminal A which is given as an example. It goes without saying that similar processing is performed as well at the initiation of the terminal B. Also, while this embodiment has been described in connection with the initiation of a terminal, given as an example, such a processing method may be applied, for example, to an embodiment in which the sequence of Fig. 5 is executed at a timing at which any terminal recognizes the recovery from a fault on the transmission path between both terminals.

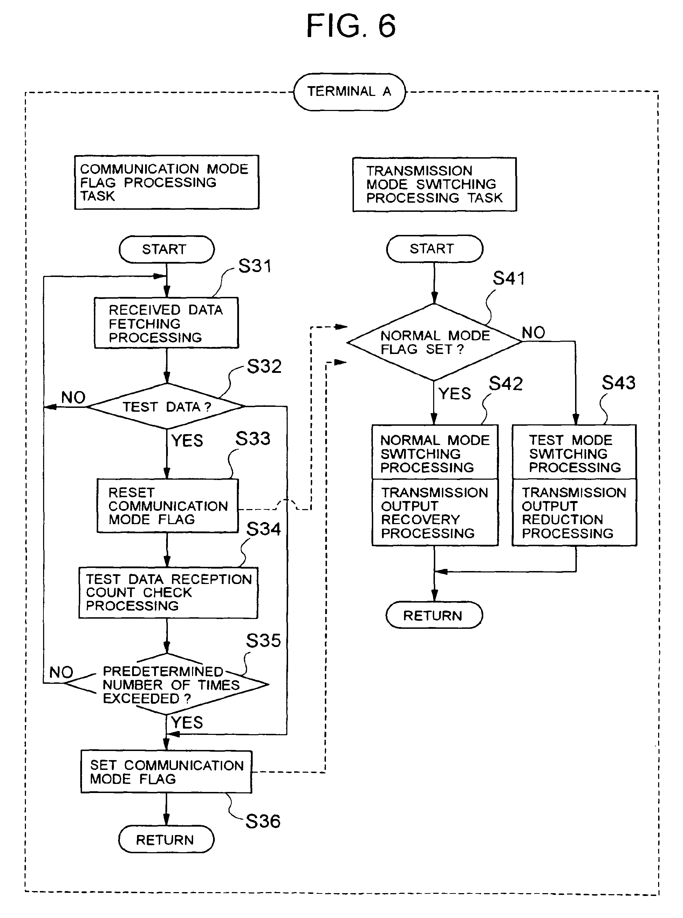

Next, the sequence processing of Fig. 5 will be described with reference to a program flow chart shown in Fig. 6. While Fig. 6 shows a flow chart of a processing program in the terminal A, it goes without saying that a similar processing program is installed in the terminal B. Also, a processing program related to the operation of the signal sate determination part 14 in the processing method is called the "communication mode flag processing task," and a processing program related to the operation of the signal generator part 11 is called the "transmission mode switching processing task."

The communication mode flag refers to an identification flag indicated, for example, by the state of a register provided on the RAM memory of the control part 15, and the flag set at "1" is called a "normal mode," while the flag set at "0" is called a "test mode." The normal mode refers to a communication mode in which normal data such as video data, audio data, and a variety of monitoring and control data is transmitted and received between both terminals. The test mode in turn refers to a communication mode in which the test data of Fig. 3B or 3C, for example, is transmitted and received between both terminals.

First, a flow chart of the communication mode switching processing task in Fig. 6 will be described. This task may be repeatedly initiated at all times after the terminal A normally starts the operation, or may be initiated in synchronism with a timing at which the terminal A transmits data.

As the task is initiated, the CPU in the control part 15 determines the state of the communication mode flag at step S41. If the flag is set, i.e., if the communication mode is determined to be the normal mode, the CPU proceeds to step S42. If the flag has been reset, i.e., if the communication mode is determined to be the test mode, the CPU proceeds to step S43.

Therefore, when it is determined that the flag has been reset, the CPU proceeds to step S43 to execute the test mode switching processing and transmission output reduction processing. This brings the operation of the signal generator part 11 and optical transmitter part 12 into the test mode. Specifically, transmission data is replaced from normal data to test data in a special data format, and the output power of an optical transmission signal output from the optical transmitter 12 is reduced in response to a variety of control instructions from the control part 15. Since the flag is reset in the initial processing at the initiation of the terminal A, step S43 is executed without exception after the initiation of the terminal A, to output the test data from the terminal A to the transmission path as an optical transmission signal having reduced output power.

On the other hand, if it is determined at step S41 that the normal mode flag is set, the CPU executes the normal mode switching processing and transmission output restitution processing at step S42, thus bringing the operation of the signal generator part 11 and optical transmitter part 12 into the normal mode. Specifically, the transmission data is replaced from the test data to the normal data, and the output power of the optical transmission signal output from the optical transmitter u nit 12 is increased to the value for normal data transmission in response to a variety of control instructions from the control part 15.

Next, a flow chart of the communication mode flag processing task in Fig. 6 will be described. This task may be repeatedly initiated at all time after the transmission operation has been started from the terminal A with recognition that a signal from the terminal B is normally received, or may be initiated at a predetermined timing in synchronism with reception of a normal signal.

As the task is initiated, the CPU first fetches received data from the signal state determination part 14 at step 31 to determine the contents (step S32). If it is determined at step S32 that the fetched data is the test data, for example, shown in Fig. 3B or 3C, the CPU recognizes the communication processing currently under way is in the test mode, and resets the communication mode flag (step S33). On the other hand, if it is determined at step S32 that the received data is not the test data but normal data, the CPU proceeds to step S36.

After terminating the communication mode flag reset processing at step S33, the CPU proceeds to step S34 to check the number of times the test data has been so far received, and proceeds to step S36 if it is determined that the number of times exceeds a predetermined value (step S35). On the other hand, if it is determined at step S35 that the number of times does not exceed the predetermined value, the CPU returns to step S31 to repeat the foregoing operation.

Then, the CPU sets the communication mode flag to "1" at step S36, followed by termination of the task.

As is apparent from the actions of the two processing tasks described above, the communication mode of the terminal A is first set into the test mode after the terminal A has been initiated. Specifically, the test data in a particular format is delivered from the terminal A to the transmission path as an optical transmission signal having reduced output power. Subsequently, when the test data from a destination terminal has been received a number of times exceeding a predetermined value, or normal data is received from the destination terminal, the communication mode of the terminal A is switched to the normal mode, permitting the terminal A to transmit normal data such as video, audio and the like through an optical signal having normal output power.

As described above, the foregoing processing method is not limited only to the initiation of the terminal A, but is also applied to the initiation of the terminal B. Also, the sequence processing method can be applied even to an embodiment which assumes a recovery from a fault on a transmission path between both terminals.

As described above, the second embodiment of the present invention includes, in addition to the first embodiment, the signal generator part 11, optical transmitter part 12, optical receiver part 13, signal state determination part 14, and control part 15 which make up third test signal supplying means for supplying a test signal to the optical transmission path when transmission/reception of a signal is started through the optical transmission path; the signal generator part 11, optical transmitter part 12, optical receiver part 13, signal state determination part 14, and control part 15 which make up communication mode switching means for stopping supplying the test signal to the optical transmission path and starting supplying a normal signal when the frequency of detecting the test signal exceeds a predetermined threshold. Consequently, according to this embodiment, confirmation can be made with the test signal that the optical transmission path normally functions before starting optical transmission of a normal signal at the initiation of the terminal, and at a recovery from a fault on the transmission path, thus making it possible to increase the stability of the operation of the optical transmission system.

## Claims

1. An optical transmission system having first and second terminals (A, B) for transmitting/receiving a signal through an optical transmission path (30), comprising:
a first test signal supplying means (11) provided in said first terminal (B) and responsive to a detection of erroneous contents in a received signal received through said optical transmission path (30) for supplying a test signal to said optical transmission path (30);
a second test signal supplying means (11) provided in said second terminal (A) and responsive to a detection of a received signal received through said optical transmission path (30), for supplying a test signal to said optical transmission path (30) when said received signal is said test signal supplied from said first test signal supplying means; and
a communication stopping means (15)
**characterized in that**
said test signal has a signal data format in which the structure of a data portion is different from a normal signal, and said communication stopping means (15) stops the transmission/ reception of signals through said optical transmission path (30) when a frequency at which the erroneous contents are detected or a frequency at which the test signal is detected exceeds a predetermined threshold.

2. An optical transmission system according to claim 1, further comprising:
a communication mode switching means for stopping supplying a test signal to said optical transmission path (30) and starting supplying a normal signal when the frequency at which the test signal is detected exceeds the predetermined threshold after the transmission/reception of a signal has been started through said optical transmission path (30).

3. An optical transmission system according to one of the claims 1 or 2, wherein said test signal has output power lower than output power of said normal signal.

4. An optical transmission system according to one of the claims 1 to 3, wherein said test signal has the signal data format comprised only of a synchronization signal.

5. A fault detection processing method in an optical transmission system for transmitting and receiving a signal through an optical transmission path (30), said method comprising the steps of:
supplying a test signal from a first terminal (B) to said optical transmission path (30) when erroneous contents are detected in a received signal received through said optical transmission path (30); and
supplying a test signal from a second terminal (A) to said optical transmission path (30) when the received signal received through said optical transmission path (30) is said test signal provided from said first terminal (B);
**characterized by**
said test signal having a signal data format in which the structure of a data portion is different from a normal signal, and
stopping transmission/reception of a signal through said optical transmission path (30) when a frequency at which the erroneous contents are detected or a frequency at which said test signal is detected exceeds a predetermined threshold.

6. A fault detection processing method according to claim 5, further comprising the steps of:
supplying a test signal to said optical transmission path (30) when the transmission/reception of a signal is started through said optical transmission path (30); and
stopping supplying the test signal to said optical transmission path (30) and starting supplying a normal signal when the frequency at which the test signal is detected exceeds the predetermined threshold after the transmission/reception of a signal has been started through said optical transmission path (30).

7. An optical terminal (B) for use in an optical transmission system of claim 1 for transmitting/receiving a signal through an optical transmission path (30), comprising:
a first test signal supplying means (11) responsive to a detection of erroneous contents in a received signal received from a second optical terminal (A) through said optical transmission path (30) for supplying a test signal to said optical transmission path (30);
a second test signal supplying means responsive to a detection of a received signal being received from a second optical terminal (A) through said optical transmission path (30), for supplying a test signal to said optical transmission path (30); and
a communication stopping means;
**characterized in that**
said test signal has a signal data format in which the structure of a data portion is different from a normal signal, and said communication stopping means (15) stops the transmission/reception of signals through said optical transmission path (30) when a frequency at which the erroneous contents are detected or a frequency at which the test signal is detected exceeds a predetermined threshold.

8. An optical terminal according to claim 7, further comprising:
a communication mode switching means for stopping supplying the test signal to said optical transmission path (30) and starting supplying a normal signal when the frequency at which the test signal is detected exceeds the predetermined threshold after the transmission/reception of a signal has been started through said optical transmission path.

## Patentansprüche

1. Optisches Übertragungssystem mit einem ersten und einem zweiten Terminal (A, B) zum Übertragen/Empfangen eines Signals durch einen optischen Übertragungsweg (30), das umfasst:
ein erstes Mittel (11) zum Liefern eines Testsignals, das in dem ersten Terminal (B) vorgesehen ist und das auf eine Detektion von fehlerhaften Inhalten in einem empfangenen Signal anspricht, das durch den optischen Übertragungsweg (30) empfangen wird, um ein Testsignal an den optischen Übertragungsweg (30) zu liefern;
ein zweites Mittel (11) zum Liefern eines Testsignals, das in dem zweiten Terminal (A) vorgesehen ist und das auf eine Detektion eines empfangenen Signals anspricht, das durch den optischen Übertragungsweg (30) empfangen wird, um ein Testsignal an den optischen Übertragungsweg (30) zu liefern, wenn das empfangene Signal das von dem ersten Mittel zum Liefern eines Testsignals gelieferte Testsignal ist; und
ein Mittel (15) zum Anhalten einer Kommunikation,
**dadurch gekennzeichnet, dass**
das Testsignal ein Signaldatenformat aufweist, bei dem die Struktur eines Datenabschnitts von einem normalen Signal verschieden ist, und dass das Mittel (15) zum Anhalten einer Kommunikation die Übertragung/den Empfang von Signalen durch den optischen Übertragungsweg (30) anhält, wenn eine Häufigkeit, mit der die fehlerhaften Inhalte detektiert werden, oder eine Häufigkeit, mit der das Testsignal detektiert wird, einen vorbestimmten Schwellenwert übersteigt.

2. Optisches Übertragungssystem nach Anspruch 1, das ferner umfasst:
ein Mittel zum Wechseln eines Kommunikationsmodus, um das Liefern eines Testsignals an den optischen Übertragungsweg (30) anzuhalten und um das Liefern eines normalen Signals zu starten, wenn die Häufigkeit, mit der das Testsignal detektiert wird, den vorbestimmten Schwellenwert übersteigt, nachdem die Übertragung/der Empfang eines Signals durch den optischen Übertragungsweg (30) gestartet wurde.

3. Optisches Übertragungssystem nach Anspruch 1 oder 2, wobei das Testsignal eine Ausgangsleistung aufweist, die geringer ist als die Ausgangsleistung des normalen Signals.

4. Optisches Übertragungssystem nach einem der Ansprüche 1 bis 3, wobei das Signaldatenformat des Testsignals nur aus einem Synchronisationssignal besteht.

5. Verfahren zum Verarbeiten einer Störungsdetektion in einem optischen Übertragungssystem zum Übertragen und Empfangen eines Signals durch einen optischen Übertragungsweg (30), wobei das Verfahren die Schritte umfasst, dass:
ein Testsignal von einem ersten Terminal (B) an den optischen Übertragungsweg (30) geliefert wird, wenn fehlerhafte Inhalte in einem empfangenen Signal detektiert werden, das durch den optischen Übertragungsweg (30) empfangen wird; und
ein Testsignal von einem zweiten Terminal (A) an den optischen Übertragungsweg (30) geliefert wird, wenn das empfangene Signal, das durch den optischen Übertragungsweg (30) empfangen wird, das von dem ersten Terminal (B) bereitgestellte Testsignal ist;
**dadurch gekennzeichnet, dass**
das Testsignal ein Signaldatenformat aufweist, bei dem die Struktur eines Datenabschnitts von einem normalen Signal verschieden ist, und
dass die Übertragung/der Empfang eines Signals durch den optischen Übertragungsweg (30) angehalten wird, wenn eine Häufigkeit, mit der die fehlerhaften Inhalte detektiert werden, oder eine Häufigkeit, mit der das Testsignal detektiert wird, einen vorbestimmten Schwellenwert übersteigt.

6. Verfahren zum Verarbeiten einer Störungsdetektion nach Anspruch 5, das ferner die Schritte umfasst, dass:
ein Testsignal an den optischen Übertragungsweg (30) geliefert wird, wenn die Übertragung/der Empfang eines Signals durch den optischen Übertragungsweg (30) gestartet wird; und
das Liefern des Testsignals an den optischen Übertragungsweg (30) angehalten wird und das Liefern eines normalen Signals gestartet wird, wenn die Häufigkeit, mit der das Testsignal detektiert wird, den vorbestimmten Schwellenwert übersteigt, nachdem die Übertragung/der Empfang eines Signals durch den optischen Übertragungsweg (30) gestartet wurde.

7. Optisches Terminal (B) zur Verwendung in einem optischen Übertragungssystem nach Anspruch 1 zum Übertragen/Empfangen eines Signals durch einen optischen Übertragungsweg (30), das umfasst:
ein erstes Mittel (11) zum Liefern eines Testsignals, das auf eine Detektion von fehlerhaften Inhalten in einem empfangenen Signal anspricht, das von einem zweiten optischen Terminal (A) durch den optischen Übertragungsweg (30) empfangen wird, um ein Testsignal an den optischen Übertragungsweg (30) zu liefern;
ein zweites Mittel zum Liefern eines Testsignals, das auf eine Detektion eines empfangenen Signals anspricht, das von einem zweiten optischen Terminal (A) durch den optischen Übertragungsweg (30) empfangen wird, um ein Testsignal an den optischen Übertragungsweg (30) zu liefern; und
ein Mittel zum Anhalten einer Kommunikation;
**dadurch gekennzeichnet, dass**
das Testsignal ein Signaldatenformat aufweist, bei dem die Struktur eines Datenabschnitts von einem normalen Signal verschieden ist, und dass das Mittel (15) zum Anhalten einer Kommunikation die Übertragung/den Empfang von Signalen durch den optischen Übertragungsweg (30) anhält, wenn eine Häufigkeit, mit der die fehlerhaften Inhalte detektiert werden, oder eine Häufigkeit, mit der das Testsignal detektiert wird, einen vorbestimmten Schwellenwert übersteigt.

8. Optisches Terminal nach Anspruch 7, das ferner umfasst:
ein Mittel zum Wechseln eines Kommunikationssmodus, um das Liefern des Testsignals an den optischen Übertragungsweg (30) anzuhalten und das Liefern eines normalen Signals zu starten, wenn die Häufigkeit, mit der das Testsignal detektiert wird, den vorbestimmten Schwellenwert übersteigt, nachdem die Übertragung/ der Empfang eines Signals durch den optischen Übertragungsweg gestartet wurde.

## Revendications

1. Système de transmission optique comprenant une première et une seconde terminaison (A, B) pour transmettre/recevoir un signal via un trajet de transmission optique (30), comprenant :
un premier moyen de fourniture de signal de test (11), prévu dans ladite première terminaison (B) et réagissant à une détection de contenus erronés dans un signal reçu à travers ledit trajet de transmission optique (30) pour fournir un signal de test audit trajet de transmission optique (30) ;
un second moyen de fourniture de signal de test (11), prévu dans ladite seconde terminaison (A) et réagissant à une détection d'un signal reçu à travers ledit trajet de transmission optique (30) pour fournir un signal de test vers ledit trajet de transmission optique (30) quand ledit signal reçu est ledit signal de test fourni par ledit premier moyen de fourniture de signal de test ; et
un moyen d'arrêt de communication (15),
**caractérisé en ce que**
ledit signal de test a un format de données dans lequel la structure d'une portion de données est différente d'un signal normal, et ledit moyen d'arrêt de communication (15) arête la transmission/réception de signaux à travers ledit trajet de transmission optique (30) lorsqu'une fréquence à laquelle les contenus erronés sont détectés ou une fréquence à laquelle le signal de test est détecté dépasse un seuil prédéterminé.

2. Système de transmission optique selon la revendication 1, comprenant en outre :
un moyen de commutation de mode de communication pour arrêter la fourniture d'un signal de test vers ledit trajet de transmission optique (30) et pour démarrer la fourniture d'un signal normal quand la fréquence à laquelle le signal de test est détecté dépasse le seuil prédéterminé après que la transmission/réception d'un signal a été démarrée à travers ledit trajet de transmission optique (30).

3. Système de transmission optique selon l'une des revendications 1 ou 2, dans lequel ledit signal de test présente une puissance de sortie inférieure à la puissance de sortie dudit signal normal.

4. Système de transmission optique selon l'une des revendications 1 à 3, dans lequel ledit signal de test est tel que le format des données comprend uniquement un signal de synchronisation.

5. Procédé de traitement de détection de défauts dans un système de transmission optique destiné à transmettre et à recevoir un signal à travers un trajet de transmission optique (30), ledit procédé comprenant les étapes consistant à :
fournir un signal de test depuis une première terminaison (B) vers ledit trajet de transmission optique (30) lorsque des contenus erronés sont détectés dans un signal reçu à travers ledit trajet de transmission optique (30) ; et
fournir un signal de test depuis une seconde terminaison (A) vers ledit trajet de transmission optique (30) quand le signal reçu à travers ledit trajet de transmission optique (30) est ledit signal de test fourni depuis ladite première terminaison (B) ;
**caractérisé en ce que** :
ledit signal de test comporte un format de données dans lequel la structure d'une partie de données est différente d'un signal normal, et
**en ce que** qu'on arrête la transmission/réception d'un signal à travers ledit trajet de transmission optique (30) quand une fréquence à laquelle les contenus erronés sont détectés ou une fréquence à laquelle ledit signal de test est détecté dépasse un seuil prédéterminé.

6. Procédé de traitement de détection de défauts selon la revendication 5, comprenant en outre les étapes consistant à :
fournir un signal de test vers ledit trajet de transmission optique (30) quand la transmission/réception d'un signal est démarrée à travers ledit trajet de transmission optique (30) ; et
arrêter de fournir le signal de test vers ledit trajet de transmission optique (30), et démarrer la fourniture d'un signal normal quand la fréquence à laquelle le signal de test est détecté dépasse le seuil prédéterminé après avoir démarré la transmission/réception d'un signal à travers ledit trajet de transmission optique (30).

7. Terminaison optique (B) destinée à être utilisée dans un système de transmission optique selon la revendication 1 pour transmettre/recevoir un signal à travers un trajet de transmission optique (30), comprenant :
un premier moyen de fourniture de signal de test (11) qui réagit à une détection de contenus erronés dans un signal reçu depuis une seconde terminaison optique (A) à travers ledit trajet de transmission optique (30) pour fournir un signal de test vers ledit trajet de transmission optique (30) ;
un second moyen de fourniture de signal de test qui réagit à une détection d'un signal reçu depuis une seconde terminaison optique (A) à travers ledit trajet de transmission optique (30) pour fournir un signal de test vers ledit trajet de transmission optique (30) ; et
un moyen d'arrêt de communication ;
**caractérisé en ce que**
ledit signal de test a un format de données dans lequel la structure d'une portion de données est différente d'un signal normal, et ledit moyen d'arrêt de communication (15) arrête la transmission/réception de signaux à travers ledit trajet de transmission optique (30) quand une fréquence à laquelle les contenus erronés sont détectés ou une fréquence à laquelle le signal de test est détecté dépasse un seuil prédéterminé.

8. Terminaison optique selon la revendication 7, comprenant en outre :
un moyen de commutation de mode de communication pour arrêter la fourniture du signal de test vers ledit trajet de transmission optique (30) et démarrer la fourniture d'un signal normal quand la fréquence à laquelle le signal de test est détecté dépasse le seuil prédéterminé après avoir démarré la transmission/réception d'un signal à travers ledit trajet de transmission optique.
